(19)

Europäisches
Patentamt
European
Patent Office
Office européen
des brevets

(11) **EP 2 988 406 A1**

(12) **EUROPEAN PATENT APPLICATION**

(43) Date of publication:
**24.02.2016 Bulletin 2016/08**

(51) Int Cl.:
*H02M 7/483* (2007.01)

(21) Application number: **14275172.6**

(22) Date of filing: **19.08.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALSTOM Technology Ltd
5400 Baden (CH)**

(72) Inventors:
• **JASIM, Omar Fadhel
Nottingham
NG8 2RW (GB)**

• **MORENO MUÑOZ, Francisco Jose
Stafford
ST16 2QZ (GB)**
• **DANG, Si
Stafford
ST16 2EB (GB)**
• **DYKE, Kevin James
Stafford
ST17 4YA (GB)**

(74) Representative: **Potter Clarkson LLP
The Belgrave Centre
Talbot Street
Nottingham NG1 5GG (GB)**

(54) **Improvements in or relating to the control of converters**

(57)     There is provided a method of controlling a converter including at least one converter limb corresponding to a or a respective phase of the converter, the or each converter limb extending between first and second DC terminals and including first and second limb portions separated by an AC terminal, each limb portion including a converter arm, at least one of the limb portions including at least one director arm, the or each director arm including a director switch, the or each director switch being switchable to selectively permit and inhibit a flow of current in the corresponding director arm. The method comprises the steps of:

(a) obtaining a or a respective AC current demand phase waveform for the or each converter limb which the corresponding converter limb is required to track, and a DC current demand which the or each converter limb is also required to track;

(b) determining a limb portion current ($I_{A+}$, $I_{A-}$) for each limb portion that the limb portion must contribute to track the corresponding required AC current demand phase waveform and the required DC current demand, wherein the step of determining the limb portion current for each limb portion includes determining a director arm current for the or each director arm that the director arm must contribute to track the corresponding required AC current demand phase waveform and the required DC current demand, wherein the step of determining the limb portion current for each limb portion includes determining a converter arm current for each converter arm that the converter arm must contribute to track the corresponding required AC current demand phase waveform and the required DC current demand, wherein each of the determined arm currents ($I_{A+}$, $I_{A-}$) includes a current ramp profile (100,102), each of the current ramp profiles (100,102) including a non-zero current slope;

(c) timing the current ramp profile (100) of the determined director arm current ($I_{A+}$) for the director arm or the one of the director arms to fully or partially overlap with the current ramp profile (102) of the determined arm current ($I_{A-}$) for the one of the other arms so as to cause transfer of current between the director arm or the one of the director arms and the one of the other arms:

before the director switch for the director arm or the one of the director arms is switched from permitting a flow of current to inhibiting a flow of current in the corresponding director arm; and/or

after the director switch for the director arm or the one of the director arms is switched from inhibiting a flow of current to permitting a flow of current in the corresponding director arm; and

(d) providing a limb portion voltage source for each limb portion to achieve the corresponding determined limb portion current ($I_{A+}$, $I_{A-}$).

EP 2 988 406 A1

Figure 5

**Description**

This invention relates to a method of controlling a converter and to such a converter.

In high voltage direct current (HVDC) power transmission networks alternating current (AC) power is typically converted to direct current (DC) power for transmission via overhead lines and/or under-sea cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance.

The conversion between DC power and AC power is utilized in power transmission networks where it is necessary to interconnect the DC and AC electrical networks. In any such power transmission network, converters are required at each interface between AC and DC power to effect the required conversion; AC to DC or DC to AC.

According to a first aspect of the invention there is provided a method of controlling a converter including at least one converter limb corresponding to a or a respective phase of the converter, the or each converter limb extending between first and second DC terminals and including first and second limb portions separated by an AC terminal, each limb portion including a converter arm, at least one of the limb portions including at least one director arm, the or each director arm including a director switch, the or each director switch being switchable to selectively permit and inhibit a flow of current in the corresponding director arm, the method comprising the steps of:

> (a) obtaining a or a respective AC current demand phase waveform for the or each converter limb which the corresponding converter limb is required to track, and a DC current demand which the or each converter limb is also required to track;
> (b) determining a limb portion current for each limb portion that the limb portion must contribute to track the corresponding required AC current demand phase waveform and the required DC current demand, wherein the step of determining the limb portion current for each limb portion includes determining a director arm current for the or each director arm that the director arm must contribute to track the corresponding required AC current demand phase waveform and the required DC current demand, wherein the step of determining the limb portion current for each limb portion includes determining a converter arm current for each converter arm that the converter arm must contribute to track the corresponding required AC current demand phase waveform and the required DC current demand, wherein each of the determined arm currents includes a current ramp profile, each of the current ramp profiles including a non-zero current slope;
> (c) timing the current ramp profile of the determined director arm current for the director arm or one of the director arms to fully or partially overlap with the current ramp profile of the determined arm current for one of the other arms so as to cause transfer of current between the director arm or the one of the director arms and the one of the other arms:

>> before the director switch for the director arm or the one of the director arms is switched from permitting a flow of current to inhibiting a flow of current in the corresponding director arm; and/or
>> after the director switch for the director arm or the one of the director arms is switched from inhibiting a flow of current to permitting a flow of current in the corresponding director arm; and

> (d) providing a limb portion voltage source for each limb portion to achieve the corresponding determined limb portion current.

For the purposes of this specification, a current slope is defined as a rate of change of current (which can be negative, zero or positive) over a defined period. It follows that a non-zero current slope is defined as a negative or positive constant rate of change of current over a defined period. It will be appreciated that a vertical current ramp profile is defined by an instantaneous change in current and thereby does not have a defined current slope.

The provision of the current ramp profile in each of the determined arm currents results in a gradual change of current in the corresponding limb portion when the director switch for the director arm or the one of the director arms is switched between permitting a flow of current and inhibiting a flow of current in the corresponding director arm, thus preventing current and voltage overshoots from being caused by the provision of a limb portion voltage source for each limb portion to achieve the corresponding determined limb portion current. Such current and voltage overshoots are undesirable because they can result in electromagnetic interference, high frequency harmonics on the associated DC and AC networks, and stress on the converter.

In addition, the aforementioned timing of the current ramp profiles obviates the need to introduce a time delay to the switching of the director switch between permitting a flow of current and inhibiting a flow of current in the corresponding director arm in order to result in a gradual change of current in the corresponding limb portion. The omission of the time delay not only ensures that the or each converter limb can be controlled to accurately track the AC current demand phase waveform and DC current demand, but also allows the converter to provide a rapid response to certain events and thereby enables the converter to achieve a high performance level.

It will be appreciated that step (c) of the method according to the invention may be performed such that the timing of the current ramp profiles is set to cause transfer of current from a director arm to a converter arm, from a converter arm to a director arm, or from a director arm to another director arm. It will be further appreciated that step (c) of the method according to the invention may be performed such that the timing of the current ramp profiles is set to cause transfer of current between a director arm and a converter arm belonging to the same limb portion, between a director arm and another arm belonging to the same converter limb and/or between a director arm and another arm belonging to different converter limbs.

The period between the overlap of the current ramp profiles of the different determined arm currents and the switching of the director switch between permitting a flow of current and inhibiting a flow of current in the corresponding director arm may vary depending on a plurality of factors that include, but are not limited to, the type of control algorithm used to control the converter, sampling period, and the extent of the overlap.

It will be understood that the step of providing a limb portion voltage source for each limb portion to achieve the corresponding determined limb portion current may be carried out using a voltage source that forms part of the converter and that is either integral with or external to the limb portion.

The shape of the non-zero current slope of each of the current ramp profiles may vary depending on the control requirements of the converter. For example, the current ramp profiles may be identical or one of the current ramp profiles may be the inverse of one other of the current ramp profiles, and/or the non-zero current slope may be a constant current slope or a variable current slope.

When the non-zero current slope is a variable current slope, the non-zero current slope may be a part-sinusoid current slope or may include a part-sinusoid current slope section. Since the derivative of a sinusoidal is also a sinusoidal, the use of a current ramp profile with such a non-zero current slope would prevent the occurrence of high dV/dt pulses in the converter, which may otherwise result from the use of a current ramp profile with a non-zero current slope that is a constant current slope.

The or each director arm may be connected in series with one or a respective one of the converter arms between the corresponding AC and DC terminals. In this case the or each such director arm carries the same current as the converter arm with which it is connected in series. Accordingly, for a series-connected pair of converter and director arms, the determined converter arm current is the same as the determined director arm current.

The or each director arm may be connected in parallel with one or a respective one of the converter arms between the corresponding AC and DC terminals. In this case the or each such director arm carries a current that is different from that carried by the converter arm with which it is connected in parallel. Accordingly, for a parallel-connected pair of converter and director arms, the determined converter arm current is different from the determined director arm current.

The method of controlling the converter according to the invention may further include the step of carrying out mathematical optimization to determine one or more optimal limb portion currents and/or provide optimal limb portion voltage sources.

Carrying out one or other of the aforementioned mathematical optimization steps, i.e. selecting the best individual limb portion current and/or the best individual limb portion voltage source (with regard to chosen criteria) from a set of available alternatives, allows the AC and DC current demands to be controlled independently of one another, e.g. by a higher level controller.

It also permits variations in the performance of each limb portion to be accommodated while operation of the converter as a whole continues.

For example, in the case of limb portion currents, conventional methods of controlling a converter consider the limb portions to have equal performance characteristics to one another, with the result that the limb portions are always controlled to each provide the same, equal current contribution, irrespective of any changes in the operating performance of a given limb portion.

Meanwhile, in relation to limb portion voltage sources, the method of the invention permits a given limb portion to provide a reduced limb portion voltage source, e.g. if the limb portion suffers damage that degrades its voltage supply performance, while the converter continues to operate.

Preferably carrying out mathematical optimization includes creating an equivalent converter configuration which represents a corresponding one of the flow of current through the converter and/or voltage conditions in the converter.

Creating an equivalent converter configuration in the aforementioned manner imposes constraints on the way in which the converter can be controlled and so assists in carrying out mathematical optimization to determine the or each optimal limb portion current and/or provide optimal limb portion voltage sources.

In a preferred embodiment of the invention creating an equivalent converter configuration which represents the flow of current through the converter includes mapping possible current flow paths through the converter, and creating an equivalent converter configuration which represents voltage conditions in the converter includes mapping the limb portion voltage source and an inductive component for each limb portion.

Each of mapping the possible current flow paths through the converter and/or mapping the limb portion voltage source and an inductive component for each limb portion helps to tailor the method of control to a given converter topology, i.e. a given converter structure.

Optionally the converter includes a plurality of converter limbs and carrying out mathematical optimization includes a corresponding one of applying a current weighting to the relative current contribution provided by a plurality of limb portions and/or applying a voltage weighting to the relative voltage contribution provided by each limb portion voltage source.

Applying such weightings allows variations in the performance of each limb portion to be further accommodated while continuing to optimise the operation of the converter as a whole.

Another preferred embodiment of the method includes determining the or each weighting according to measured operating parameters of the converter.

Determining the weightings in the aforementioned manner allows the method to take into account environmental factors which might affect the healthy operation of the converter, and to alter the optimal limb portion currents that are determined and/or the optimal limb portion voltage sources that are provided in an effort to overcome the environmental factors and alleviate the associated impact on the operation of the converter. Examples of such environmental factors include the components in one limb portion running hot, or a limb portion suffering component damage or failure such that its performance is degraded.

Preferably when controlling the converter under a particular operating condition applying a weighting includes applying a different weighting to at least one limb portion such that the or each said limb portion provides a different contribution to the other limb portions.

Such a step allows the method to distinguish between one limb portion and another, e.g. according to how well a given limb portion is performing.

This is useful in circumstances where it becomes desirable to reduce the level of current contributed by a given limb portion, e.g. because the cooling associated with the limb portion is operating at a reduced capacity, and temporarily increase the level of current provided by one or more other limb portions so as to allow the converter to continue to operate and provide a high level of power conversion.

It can also be used to reduce the limb portion voltage that a given limb portion must provide, e.g. in circumstances where a fault or other damage has degraded the performance of the given limb portion, such that the converter remains able to continue operating and provide a high level of power conversion.

In a still further preferred embodiment of the invention carrying out mathematical optimization to provide an optimal limb portion voltage source for each limb portion includes reducing any deviation in an actual measured limb portion current of a given limb portion from the corresponding determined limb portion current for the said given limb portion.

Reducing any deviation in an actual measured limb portion current of a given limb portion from the corresponding determined limb portion current for the said given limb portion advantageously introduces feedback into the control of the converter which helps to ensure that the converter continues to operate in an optimised manner.

Optionally the step of reducing any deviation in an actual measured limb portion current from the corresponding determined limb portion current includes calculating an inductive voltage portion for the corresponding limb portion.

Calculating an inductive voltage portion for the corresponding limb portion reduces the number of unknown voltage conditions in the converter and so assists in carrying out mathematical optimization to provide optimal limb portion voltage sources.

The method of the invention may further include modifying the calculated inductive voltage portion to drive the actual measured limb portion current to follow the corresponding determined limb portion current.

Such a step provides a convenient means of causing the actual measured limb portion current to desirably track the corresponding determined limb portion current, and so helps to maintain optimum performance of the converter.

Preferably the method of the invention includes carrying out mathematical optimization to determine one or more minimum individual limb portion currents that the corresponding limb portion must contribute to track the corresponding required AC current demand phase waveform and the required DC current demand, and/or provide minimum individual limb portion voltage sources to achieve the corresponding determined limb portion current.

Determining one or more minimum individual limb portion currents reduces the conduction and switching losses in each limb portion because ordinarily such losses are proportional to current squared, i.e. $I^2$.

In the meantime, determining a minimum individual limb portion voltage source for each limb portion helps to reduce the degree of disruption caused to the converter and so further assists in maintaining its optimised operation.

In a preferred method of controlling a converter including carrying out mathematical optimization only to determine one or more optimal limb portion currents, providing a limb portion voltage source for each limb portion to achieve the corresponding determined limb portion current may include applying a control algorithm to directly establish optimal limb portion voltage sources from each of the corresponding determined limb portion currents. Such direct establishment of the optimal limb portion voltage sources reduces the computational effort and overhead associated with controlling the converter, and also helps to improve the robustness of the method of the invention with respect to controller uncertainties and modelling errors.

According to a second aspect of the invention, there is provided a converter comprising at least one converter limb corresponding to a or a respective phase of the converter, the or each converter limb extending between first and second DC terminals and including first and second limb portions separated by an AC terminal, each limb portion including a converter arm, at least one of the limb portions including at least one director arm, the or each director arm including a director switch, the or each director switch being switchable to selectively permit and inhibit a flow of current in the corresponding director arm, the converter further comprising a controller configured to:

(a) obtain a or a respective AC current demand phase waveform for the or each converter limb which the corresponding converter limb is required to track, and a DC current demand which the or each converter limb is also required to track;

(b) determine a limb portion current for each limb portion that the limb portion must contribute to track the corresponding required AC current demand phase waveform and the required DC current demand, wherein determining the limb portion current for each limb portion includes determining a director arm current for the or each director arm that the director arm must contribute to track the corresponding required AC current demand phase waveform and the required DC current demand, wherein determining the limb portion current for each limb portion includes determining a converter arm current for each converter arm that the converter arm must contribute to track the corresponding required AC current demand phase waveform and the required DC current demand, wherein each of the determined arm currents includes a current ramp profile, each of the current ramp profiles including a non-zero current slope;

(c) time the current ramp profile of the determined director arm current for the director arm or one of the director arms to fully or partially overlap with the current ramp profile of the determined arm current for one of the other arms so as to cause transfer of current between the director arm or the one of the director arms and the one of the other arms:

before the director switch for the director arm or the one of the director arms is switched from permitting a flow of current to inhibiting a flow of current in the corresponding director portion; and/or
after the director switch for the director arm or the one of the director arms is switched from inhibiting a flow of current to permitting a flow of current in the corresponding director arm; and

(d) provide a limb portion voltage source for each limb portion to achieve the corresponding determined limb portion current.

The converter of the invention shares the advantages associated with the corresponding features of the method of controlling a converter according to the invention.

A preferred embodiment of the invention will now be described, by way of a non-limiting example, with reference to the accompanying drawings in which:

Figure 1(a) shows a flow diagram which illustrates principle steps in a first method according to the invention of controlling a converter;
Figure 1(b) shows a flow diagram which illustrates principle steps in a second method according to the invention of controlling a converter;
Figure 2(a) shows determined limb portion currents for first and second limb portions of a converter limb of the converter when the determined limb portion currents include first and second current ramp profiles;
Figure 2(b) illustrates an overlapping comparison of determined limb portion currents with and without a current ramp profile;
Figure 2(c) illustrates the actual limb portion current for a limb portion when the determined limb portion current includes the first and second current ramp profiles of Figure 2(a);
Figure 2(d) illustrates the actual limb portion voltage for a limb portion when the determined limb portion current includes the first and second current ramp profiles of Figure 2(a);
Figure 2(e) shows a determined limb portion current for a limb portion of a converter limb of the converter when the determined limb portion current omits the first and second current ramp profiles of Figure 2(a);
Figure 2(f) shows a close-up view of the determined limb portion current of Figure 2(e);
Figure 2(g) illustrates current overshoots in the actual limb portion current for a limb portion when the determined limb portion current omits the first and second current ramp profiles of Figure 2(a);
Figure 2(h) illustrates voltage overshoots in the actual limb portion voltage for a limb portion when the determined limb portion current omits the first and second current ramp profiles of Figure 2(a);
Figure 2(i) shows a current ramp profile in the form of a part-sinusoid current slope;

Figure 2(j) shows determined limb portion currents for first and second limb portions of a converter limb of the converter when the determined limb portion currents include first and second current ramp profiles with part-sinusoid current slopes;

Figure 3 shows a first schematic representation of an equivalent converter configuration;

Figure 4 shows a schematic view of a feedback loop which forms part of the method illustrated in Figure 1 (b);

Figure 5 shows a second schematic representation of an equivalent converter configuration;

Figure 6(a) shows determined arm currents for the director and converter arms of a first limb portion of a converter limb of the converter when the determined arm currents include current ramp profiles; and

Figure 6(b) shows determined arm currents for the director and converter arms of a first limb portion of a converter limb of the converter when the determined arm currents include current ramp profiles with part-sinusoid current slopes.

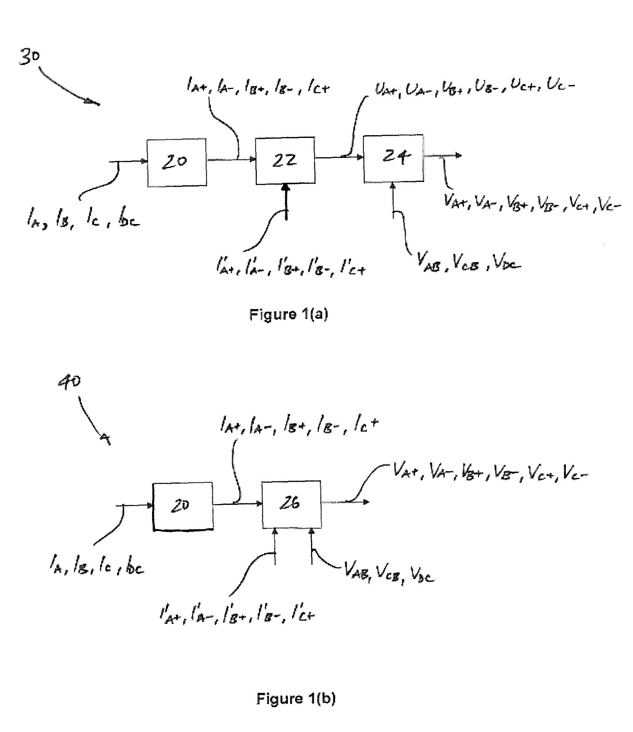

Principle steps in a method according to a first embodiment of the invention of controlling a converter are illustrated in a first flow diagram 30 shown in Figure 1 (a).

The first method of the invention is applicable to any converter that includes at least one converter limb corresponding to a or a respective phase of the converter, with the or each converter limb extending between first and second DC terminals and including first and second limb portions separated by an AC terminal, with the or each converter limb further including director switches, the director switches being switchable to selectively permit and inhibit a flow of current in the first and second limb portions respectively.

By way of example, however, it is described in connection with a three-phase converter which has three converter limbs, each of which corresponds to one of the three phases. Each converter limb extends between first and second DC terminals and includes first and second limb portions which are separated by an AC terminal. Each limb portion includes a converter arm and a director arm. In each limb portion, the director arm is connected in series with the converter arm between the corresponding AC and DC terminals. Each director arm includes a director switch that is switchable to turn on to permit a flow of current in the corresponding director arm and therefore the corresponding limb portion, and to turn off to inhibit a flow of current in the corresponding director arm and therefore the corresponding limb portion.

The first method comprises a first step of obtaining a respective AC current demand phase waveform $I_A$, $I_B$, $I_C$ for each converter limb which each converter limb is required to track, and obtaining a DC current demand $I_{DC}$ which the converter limbs are also required to track.

The various AC current demand phase waveforms $I_A$, $I_B$, $I_C$ and the DC current demand $I_{DC}$ may be obtained directly from a higher-level controller within the particular converter structure or from some other external entity. Alternatively the particular converter structure may obtain it directly by carrying out its own calculations.

The first method also includes a second step (as indicated by a first process box 20 in the first flow diagram 30) of determining a limb portion current for each limb portion that the limb portion must contribute to track the corresponding required AC current demand phase waveform $I_A$, $I_B$, $I_C$ and the required DC current demand $I_{DC}$.

In the embodiment shown, since each director arm carries the same current as the converter arm with which it is connected in series, a determined director arm current for a director arm is the same as a determined converter arm current for the corresponding converter arm. Accordingly a determined limb portion current for each limb portion is the same as each of the determined director arm current for the corresponding director arm and the determined converter arm current for the corresponding converter arm.

Determining the limb portion current for each limb portion includes determining a director arm current for each director arm that the director arm must contribute to track the corresponding required AC current demand phase waveform $I_A$, $I_B$, $I_C$ and the required DC current demand $I_{DC}$, and determining the limb portion current for each limb portion includes determining a converter arm current for each converter arm that the converter arm must contribute to track the corresponding required AC current demand phase waveform $I_A$, $I_B$, $I_C$ and the required DC current demand $I_{DC}$.

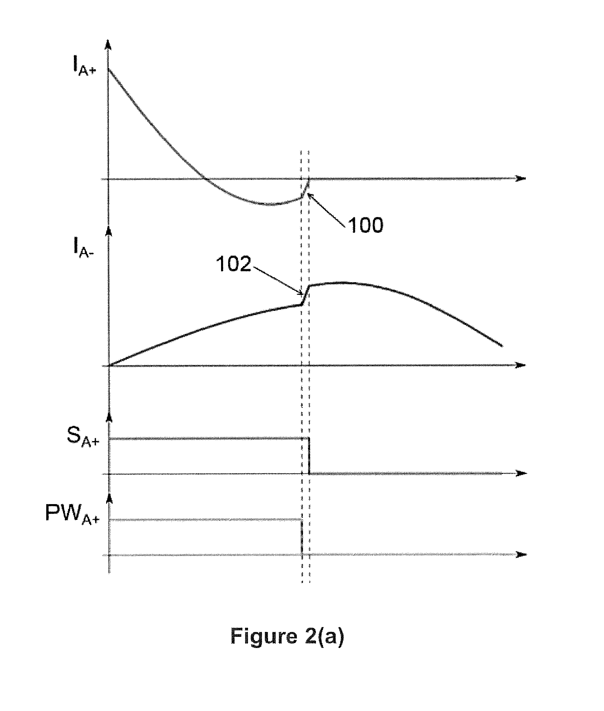

Figure 2(a) shows determined limb portion currents $I_{A+}$, $I_{A-}$ for the first and second limb portions of one of the converter limbs. It will be understood that the configuration of the determined limb portion currents $I_{A+}$, $I_{A-}$ in Figure 2(a) applies mutatis mutandis to the determined limb portion currents $I_{B+}$, $I_{B-}$, $I_{C+}$, $I_{C-}$ for each of the other converter limbs.

The determined limb portion current $I_{A+}$, $I_{A-}$ for each limb portion (i.e. the determined director arm current of the corresponding director arm and the determined converter arm current of the corresponding converter arm) is configured to include a first current ramp profile 100 and a second current ramp profile 102. Each of the first and second current ramp profiles 100,102 includes a non-zero, constant current slope. The first and second current ramp profiles 100,102 are identical.

The first current ramp profile 100 of the determined limb portion current $I_{A+}$ for the first limb portion is timed to fully overlap with the second current ramp profile 102 of the determined limb portion current $I_{A-}$ for the second limb portion so as to cause transfer of current from the first limb portion to the second limb portion before the director switch for the first limb portion is switched from permitting a flow of current to inhibiting a flow of current in the first limb portion. Similarly, the first current ramp profile of the determined limb portion current $I_{A-}$ for the second limb portion is timed to fully overlap with the second current ramp profile of the determined limb portion current $I_{A+}$ for the first limb portion so as to cause transfer of current from the second limb portion to the first limb portion before the director switch for the second limb portion is switched from permitting a flow of current to inhibiting a flow of current in the second limb portion.

It will be appreciated that the overlap between the first and second current ramp profiles of different determined limb portion currents $I_{A+}$, $I_{A-}$ may be partial instead of full.

The first current ramp profile 100 of the determined limb portion current $I_{A+}$, $I_{A-}$ for one of the first and second limb portions and the second current ramp profile 102 of the determined limb portion current $I_{A+}$, $I_{A-}$ for the other of the first and second limb portions are triggered to occur immediately before the director switch for the one of the first and second limb portions is switched from permitting a flow of current to inhibiting a flow of current in the one of the first and second limb portions. This may be achieved through use of a switching signal $PW_{A+}$, whereby a change in status of the switching signal $PW_{A+}$ triggers the first current ramp profile 100 of the determined limb portion current $I_{A+}$, $I_{A-}$ for one of the first and second limb portions and the second current ramp profile 102 of the determined limb portion current $I_{A+}$, $I_{A-}$ for the other of the first and second limb portions to occur at a period of time immediately before the status $S_{A+}$ of the director switch for the one of the first and second limb portions changes in order to switch from permitting a flow of current to inhibiting a flow of current in the one of the first and second limb portions.

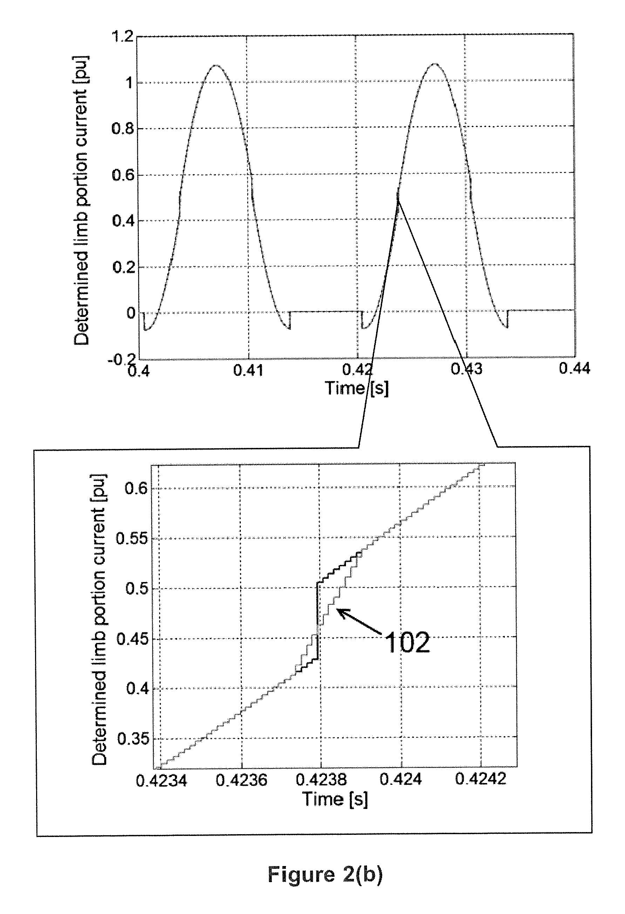

Figure 2(b) illustrates an overlapping comparison of determined limb portion currents $I_{A-}$ with and without the second current ramp profile 102. It can be seen that the omission of the current ramp profile 102 from a determined limb portion current $I_{A-}$ results in a step ramp in the determined limb portion current $I_{A-}$.

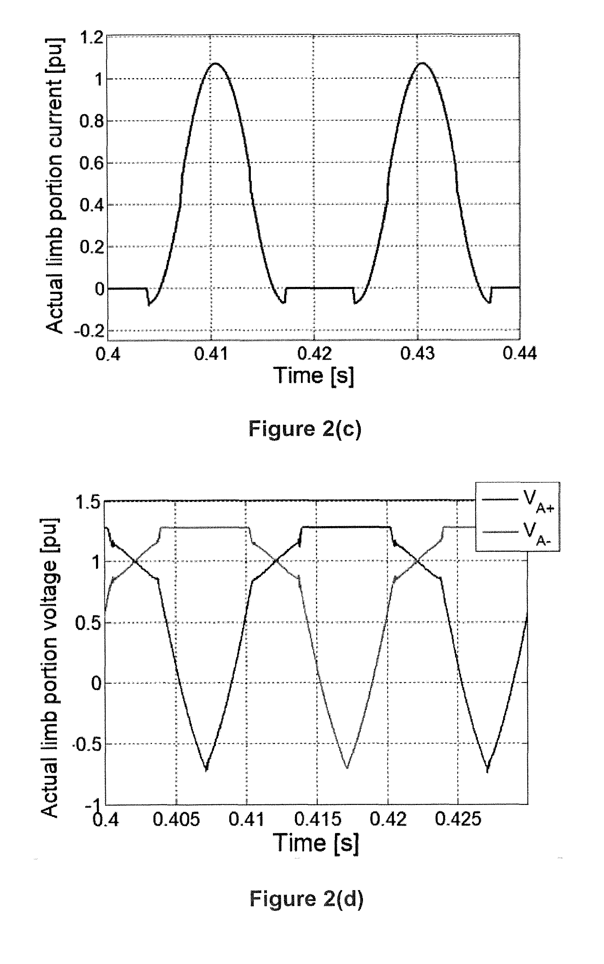

The provision of the first and second current ramp profiles 100,102 in the determined limb portion current $I_{A+}$, $I_{A-}$ for each limb portion results in a gradual change of current in the one of the first and second limb portions when the director switch for the one of the first and second limb portions is switched from permitting a flow of current to inhibiting a flow of current in the one of the first and second limb portions, thus preventing current and voltage overshoots from being caused by the provision of a limb portion voltage source for each limb portion to achieve the corresponding determined limb portion current. The resultant absence of current and voltage overshoots are shown as current and voltage spikes in Figures 2(c) and 2(d), which respectively illustrate the actual limb portion current and voltage in each limb portion when the determined limb portion currents $I_{A+}$, $I_{A-}$ include the first and second current ramp profiles 100,102. Such current and voltage overshoots are undesirable because they can result in electromagnetic interference, high frequency harmonics on the associated DC and AC networks, and stress on the converter

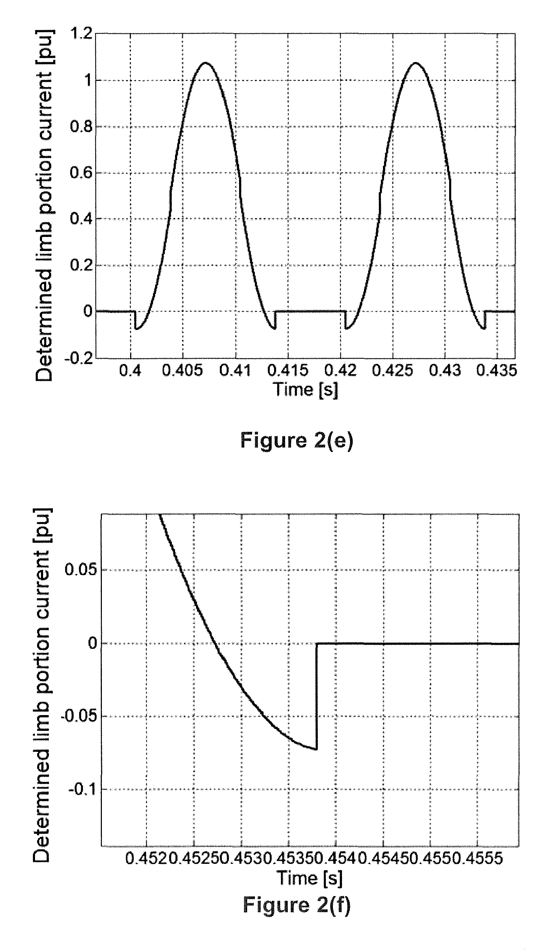

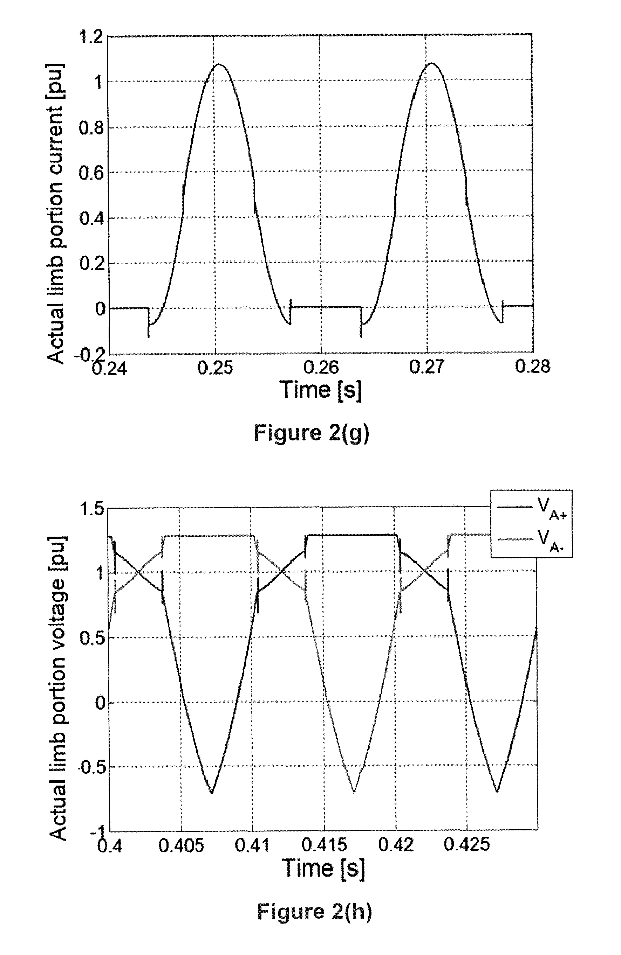

In contrast, the omission of the first and second current ramp profiles 100,102 from each determined limb portion current $I_{A+}$, $I_{A-}$ results in an instantaneous change in current (as shown in Figures 2(e) and 2(f)) at the switching of the director switch for a limb portion from permitting a flow of current to inhibiting a flow of current in the limb portion. This in turn results in the occurrence of current and voltage overshoots in the actual limb portion current and voltage for each limb portion, as shown in Figures 2(g) and 2(h) respectively.

In addition, the aforementioned timing of the first and second current ramp profiles 100,102 obviates the need to introduce a time delay to the switching of the director switch from permitting a flow of current to inhibiting a flow of current in the one of the first and second limb portions in order to result in a gradual change of current in the one of the first and second limb portions. The omission of the time delay not only ensures that each converter limb can be controlled to accurately track the AC current demand phase waveform and DC current demand, but also allows the converter to provide a rapid response to certain events and thereby enables the converter to achieve a high performance level.

The period between the overlap of the first and second current ramp profiles 100,102 of the different determined limb portion currents $I_{A+}$, $I_{A-}$ and the switching of the director switch from permitting a flow of current to inhibiting a flow of current in the one of the first and second limb portions may vary depending on a plurality of factors that include, but are not limited to, the type of control algorithm used to control the converter, sampling period, and the extent of the overlap.

On the other hand the use of a current ramp profile 100,102 with a non-zero, constant current slope could result in an undesirable voltage pulse in the converter because of the voltage-current characteristic of the limb portion inductance that is represented by the following equation:

$$v = L \frac{di}{dt}$$

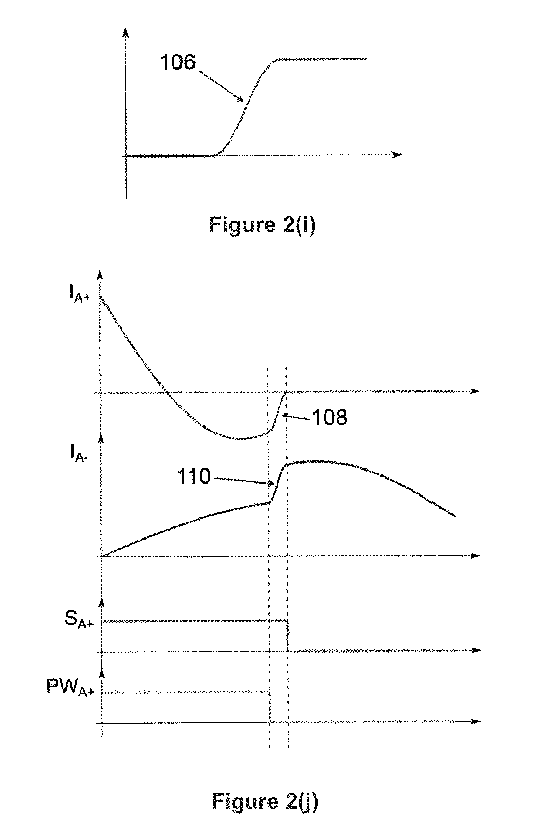

To avoid the occurrence of the voltage pulse, each of the first and second current ramp profiles may have a non-zero, variable current slope instead of a non-zero, constant current slope. More particularly, each of the first and second current ramp profiles 108,110 may have a non-zero, variable current slope that is a part-sinusoid current slope 106, as shown in Figures 2(i) and 2(j).

Since the derivative of a sinusoidal is also a sinusoidal, the use of a current ramp profile with such a non-zero current slope 106 would prevent the occurrence of high dV/dt pulses in the converter.

Furthermore, the first method of the invention includes carrying out mathematical optimization to determine a number of optimal limb portion currents.

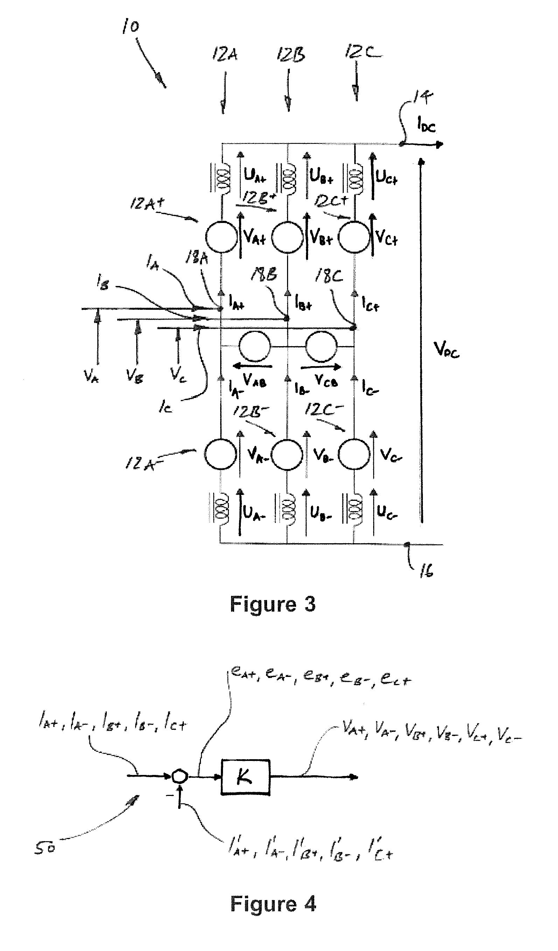

Carrying out such mathematical optimization includes creating an equivalent converter configuration 10 which represents the flow of current through the corresponding three phase converter structure, as shown in Figure 3.

The equivalent converter configuration 10 includes three converter limbs 12A, 12B, 12C, each of which corresponds to a respective first, second and third phase of the corresponding three phase converter structure which the method is intended to control. In other embodiments of the invention the converter structure being controlled may have fewer than or more than three phases and hence a different commensurate number of corresponding converter limbs. In these circumstances the equivalent converter configuration likewise has a different corresponding number of converter limbs.

In the equivalent converter configuration 10 shown each converter limb 12A, 12B, 12C extends between first and second DC terminals 14, 16, and each converter limb 12A, 12B, 12C includes a first limb portion 12A+, 12B+, 12C+ and a second limb portion 12A-, 12B-, 12C-. Each pair of first and second limb portions 12A+, 12A-, 12B+, 12B-, 12C+, 12C- in each converter limb 12A, 12B, 12C is separated by a corresponding AC terminal 18A, 18B, 18C.

In the embodiment shown in Figure 3, the converter arm of each limb portion 12A+, 12A-, 12B+, 12B-, 12C+, 12C- is represented by a limb portion voltage source $V_{A+}$, $V_{A-}$, $V_{B+}$, $V_{B-}$, Vc+, $V_C$. It is noted that Figure 3 does not show the director switches that are each connected in series with the respective limb portion voltage source $V_{A+}$, $V_{A-}$, $V_{B+}$, $V_{B-}$, $V_{C+}$, Vc- in the respective limb portion.

The equivalent converter configuration 10 also represents the respective AC current demand phase waveforms $I_A$, $I_B$, $I_C$ that each converter limb 12A, 12B, 12C is required to track, e.g. match as closely as possible, and the DC current demand $I_{DC}$ that the converter limbs 12A, 12B, 12C are also required to track.

In practice each converter limb 12A, 12B, 12C must also operate within the constraints of a corresponding AC voltage phase waveform $V_A$, $V_B$, Vcas well as a DC voltage $V_{DC}$ which, typically, correspond to values in respective AC and DC electrical networks to which the particular converter structure is connected, and so the equivalent converter configuration 10 also represents these elements.

By altering the value attributed to each of the various circuit elements mentioned above it is possible to have the equivalent converter configuration 10 reflect any particular converter structure, and thereby have the first method of the invention control the said particular converter structure. It will also be understood that the equivalent converter configuration may have fewer than or more than three phases, and thus likewise it will be understood that the first method of the invention is able also to control particular non three-phase converter structures.

Creating an equivalent converter configuration 10 which represents the flow of current through the corresponding three phase converter structure additionally includes mapping possible current flow paths through the particular converter structure.

One way in which the possible current flow paths through the particular converter structure may be mapped is by conducting a Kirchhoff analysis of the equivalent converter configuration 10 to obtain the following equations:

$$I_A = I_{A+} - I_{A-}$$
$$I_B = I_{B+} - I_{B-}$$
$$I_C = I_{C+} - I_{C-}$$
$$I_{DC} = I_{A+} + I_{B+} + I_{C+}$$

and then expressing these equations in a matrix form, i.e.:

$$\overbrace{\begin{pmatrix} 1 & -1 & 0 & 0 & 0 & 0 \\ 0 & 0 & 1 & -1 & 0 & 0 \\ 0 & 0 & 0 & 0 & 1 & -1 \\ 1 & 0 & 1 & 0 & 1 & 0 \end{pmatrix}}^{A} \cdot \overbrace{\begin{pmatrix} I_{A+} \\ I_{A-} \\ I_{B+} \\ I_{B-} \\ I_{C+} \\ I_{C-} \end{pmatrix}}^{x} = \overbrace{\begin{pmatrix} I_A \\ I_B \\ I_C \\ I_{DC} \end{pmatrix}}^{b}$$

such that *A* is a matrix which maps the possible current flow paths provided by the limb portions 12A+, 12A-, 12B+, 12B-, 12C+, 12C-.

Depending on the particular converter structure of whichever converter the method of the invention is controlling, the *A* matrix may take a different form. It may also additionally include details of the state, e.g. "on" = 1, or "off' = 0, of any switches within the converter which might impact on the available current flow paths at any particular moment depending on their switching state.

In addition, other equivalent converter configurations and corresponding analysis techniques are also possible.

Depending on the particular structure of the converter the first method of the invention is controlling, one or more of the limb portion currents to be mathematically optimized may be dependent on the remaining limb portion currents. In other words, while each of the remaining limb portion currents may be determined independently of one another, the or each dependent limb portion current will be established automatically according to each of the remaining independent limb portion currents.

In the example three phase converter in relation to which the first method is described, five of the six limb portion currents may be determined independently and hence can be mathematically optimized, while the sixth limb portion current will follow automatically from the other five mathematically optimized limb portion currents. As a result, in the example first method described mathematical optimization is carried out to determine five optimal limb portion currents.

For example, in the equivalent converter configuration 10 shown in Figure 3, further Kirchhoff analysis can be used to obtain the following equation:

$$I_{C-} = (I_{A+} + I_{B+} + I_{C+}) - (I_{A-} + I_{B-})$$

Accordingly, Ic- is defined as the dependent limb portion current since it becomes known, i.e. can be calculated automatically, once each of the remaining independent optimal limb portion currents $I_{A+}$, $I_{A-}$, $I_{B+}$, $I_{B-}$, $I_{C+}$ has been determined using the aforesaid mathematical optimization.

It will be appreciated that depending on the Kirchhoff analysis carried out one or other of the limb portion currents $I_{A+}$, $I_{A-}$, $I_{B+}$, $I_{B-}$, $I_{C+}$ may instead be defined as a dependent limb portion current. Moreover, still further equivalent converter configurations (not shown) may represent a particular converter structure which results in two or more of the limb portion currents being dependent on the other remaining limb portion currents.

As a result of the foregoing analysis, in the example embodiment described five independent optimal limb portion currents $I_{A+}$, $I_{A-}$, $I_{B+}$, $I_{B-}$, $I_{C+}$ are determined by carrying out mathematical optimization while a sixth dependent limb portion current $I_{C-}$ follows automatically, e.g. by equivalent circuit analysis and related calculation, once each of the independent optimal limb portion currents $I_{A+}$, $I_{A-}$, $I_{B+}$, $I_{B-}$, $I_{C+}$ has been determined by carrying out the said mathematical optimization.

In any event, the aforementioned mathematical optimization step also includes applying a current weighting to the relative current contribution provided by each limb portion 12A+, 12A-, 12B+, 12B-, 12C+, 12C-. The respective current weighting for each limb portion 12A+, 12A-, 12B+, 12B-, 12C+, 12C- is determined according to measured operating parameters of the particular converter structure being controlled. The various current weightings can be determined throughout operation of the said converter so as to permit an updating of the current weightings, e.g. in response to changing environmental conditions. As a result the various current weightings can vary as the converter is controlled.

For example, during normal operation of the said particular converter structure an identical current weighting is applied to each limb portion current $I_{A+}$, $I_{A-}$, $I_{B+}$, $I_{B-}$, $I_{C+}$, $I_{C-}$. However, when controlling the particular converter structure under certain operating conditions, e.g. an abnormal operating condition, a different current weighting is applied to the current contribution, i.e. the limb portion current $I_{A+}$, $I_{A-}$, $I_{B+}$, $I_{B-}$, $I_{C+}$, $I_{C-}$, provided by at least one limb portion 12A+, 12A-, 12B+, 12B-, 12C+, 12C-.

For example, in a given operating period of the particular converter structure within which, e.g. between 0.03 and 0.06 seconds, a larger current weighting is applied to the optimal limb portion current $I_{B+}$, $I_{B-}$ that each limb portion 12B+, 12B- of the second converter limb 12B must contribute. Such current weightings reduce an actual limb portion current, i.e. a measured limb portion current $I'_{B+}$, $I'_{B-}$, that each said limb portion 12B+, 12B- contributes relative to an actual current contribution, i.e. a measured limb portion current contribution $I'_{A+}$, $I'_{A-}$, $I'_{C+}$, $I'_{C-}$, of each of the other limb portions 12A+, 12A-, 12C+, 12C, which are all the same as one another.

In addition to the foregoing the first method includes carrying out mathematical optimization to determine a minimum individual limb portion current $I_{A+}$, $I_{A-}$, $I_{B+}$, $I_{B-}$, $I_{C+}$ that each of the independent limb portions 12A+, 12A-, 12B+, 12B-, 12C+ must contribute so as to track the corresponding required AC current demand phase waveform $I_A$, $I_B$, $I_C$ and the required DC current demand $I_{DC}$.

One way in which minimum individual limb portion currents $I_{A+}$, $I_{A-}$, $I_{B+}$, $I_{B-}$, $I_{C-}$, i.e. x in the *A.x = b* equation set out above, may be determined (noting that the sixth dependent limb portion current $I_{C-}$ will follow automatically once mathematical optimization has been carried out to determine the independent minimum limb portion currents $I_{A+}$, $I_{A-}$, $I_{B+}$, $I_{B-}$, $I_{C+}$), and the aforementioned individual current weightings applied to the minimal individual limb portion currents $I_{A+}$, $I_{A-}$, $I_{B+}$, $I_{B-}$, $I_{C+}$, is by solving a nonlinear optimization of the general form:

$$\min_x J_{Current} = \Psi\big(x(t_1)\big) + \int_{t_0}^{t_1} f(x(t), t)dt$$

subject to the equality constrained equation of the form:

$$A.x = b$$

where

$J_{Current}$ is the current objective function to be minimized;

$\Psi$ is the current weighting at time $t_1$;

f is the current cost function which in the embodiment described includes a current weighting matrix $Q_I$;

x is the transpose of $[I_{A+}, I_{A-}, I_{B+}, I_{B-}, I_{C+}, I_{C-}]$, i.e. $[I_{A+}, I_{A-}, I_{B+}, I_{B-}, I_{C+}, I_{C-}]$ reflected in a column vector;

$t_0$ is the time at which a particular period of control of the particular converter structure starts; and

$t_1$ is the time at which a particular period of control of the particular converter structure ends.

The current weighting matrix $Q_I$ is determined according to measured operating parameters of the converter, and may be so determined throughout the operation of the particular converter structure, such that it can vary as the said converter is controlled in response to changes in the operation of the converter.

When subject only to an equality constrained equation, as mentioned above, the Lagrangian (or the method of Lagrange multipliers) is a technique for solving the above-identified nonlinear optimization in order to find local minima of the current objective function $J_{Current}$. It may also be solved using other optimization algorithms, including iterative and programming algorithms.

As a general optimal control problem, the aforementioned nonlinear optimization could additionally include one or more inequality constraints in which case it could be solved by using the further method of Hamiltonian (Pontryagin's minimum principle).

One example of such an inequality constraint is:

$$C \overbrace{\begin{pmatrix} I_{A+} \\ I_{A-} \\ I_{B+} \\ I_{B-} \\ I_{C+} \\ I_{C-} \end{pmatrix}}^{x} \leq \overbrace{\begin{pmatrix} I_{A+}^{max} \\ I_{A-}^{max} \\ I_{B+}^{max} \\ I_{B-}^{max} \\ I_{C+}^{max} \\ I_{C-}^{max} \end{pmatrix}}^{d}$$

where

C is a matrix which maps possible maximum current flow paths provided by the limb portions 12A+, 12A-, 12B+, 12B-, 12C+, 12C-; and

d is a vector representing of the maximum desired current in each limb portion 12A+, 12A-, 12B+, 12B-, 12C+, 12C-.

In either case the minimum individual limb portion currents $I_{A+}$, $I_{A-}$, $I_{B+}$, $I_{B-}$, $I_{C+}$, $I_{C-}$ may also be determined by solving a nonlinear optimization of the form $\max_x \{-J_{Current}\}$.

Meanwhile, the first method of the invention includes a third step of providing a limb portion voltage source for each limb portion 12A+, 12A-, 12B+, 12B-, 12C+, 12C- to achieve the corresponding mathematically optimized minimum limb portion current $I_{A+}$, $I_{A-}$, $I_{B+}$, $I_{B-}$, $I_{C+}$ and the associated dependent limb portion current $I_{C-}$.

More particularly, the first method of the invention includes carrying out mathematical optimization to provide optimal limb portion voltage sources. In other embodiments of the method of the invention, however, such mathematical optimization of the limb portion voltage sources need not take place. Furthermore, in still further embodiments of the method of the invention, the following step of carrying out mathematical optimization to provide optimal limb portion voltage sources may take place without first carrying out mathematical optimisation to determine one or more optimal limb portion currents, i.e. it may take place based only on conventionally determined limb portion currents.

In any event carrying out mathematical optimization to provide optimal limb portion voltage sources includes creating an equivalent converter configuration which represents voltage conditions in the converter, i.e. includes creating the equivalent three-phase converter configuration 10 shown in Figure 3.

Representing the voltage conditions in the particular three-phase converter structure portrayed in the equivalent converter configuration 10 additionally includes mapping a limb portion voltage source $V_{A+}$, $V_{A-}$, $V_{B+}$, $V_{B-}$, $V_{C+}$, $V_{C-}$ and an inductive component for each limb portion 12A+, 12A-, 12B+, 12B-, 12C+, 12C-.

Each limb portion voltage source $V_{A+}$, $V_{A-}$, $V_{B+}$, $V_{B-}$, Vc+, Vc- may be fixed in magnitude and switchable into and out of the corresponding limb portion 12A+, 12A-, 12B+, 12B-, 12C+, 12C- or, as is the case in the particular converter structure depicted in the equivalent converter configuration 10 shown in Figure 3, may be variable in magnitude between zero (i.e. equivalent to being switched out of the corresponding limb portion 12A+, 12A-, 12B+, 12B-, 12C+, 12C-) and an upper voltage limit.

Meanwhile the inductive component for each limb portion 12A+, 12A-, 12B+, 12B-, 12C+, 12C- represents the inductance associated with the corresponding limb portion 12A+, 12A-, 12B+, 12B-, 12C+, 12C-. Such inductance may take the form of an inductor within a given limb portion 12A+, 12A-, 12B+, 12B-, 12C+, 12C-, i.e. a limb portion inductance, or the form of a stray inductance electrically associated with a given limb portion 12A+, 12A-, 12B+, 12B-, 12C+, 12C-, e.g. a phase inductance and/or a DC line inductance.

In connection with the first method of the invention, the inductive component of each limb portion 12A+, 12A-, 12B+, 12B-, 12C+, 12C- is represented in the equivalent converter configuration 10 as a inductive voltage portion $U_{A+}$, $U_{A-}$, $U_{B+}$, $U_{B-}$, $U_{C+}$, $U_{C-}$ that is made up of the voltage arising from the flow of current through the aforementioned inductance associated with a corresponding limb portion 12A+, 12A-, 12B+, 12B-, 12C+, 12C-.

In this way it is again possible to have the equivalent converter configuration 10 reflect a particular converter structure by altering the value attributed to each of the various limb portion voltage source and inductive voltage portion elements.

In other embodiments of the invention representing of the voltage conditions in the particular three-phase converter structure may additionally include mapping a resistive component for each limb portion 12A+, 12A-, 12B+, 12B-, 12C+, 12C-.

Such a resistive component represents the resistance associated with a given limb portion 12A+, 12A-, 12B+, 12B-, 12C+, 12C-, and similarly may take the form of a resistor within a given limb portion 12A+, 12A-, 12B+, 12B-, 12C+, 12C-, i.e. a limb portion resistance, or the form of a resistance electrically associated with a given limb portion 12A+, 12A-, 12B+, 12B-, 12C+, 12C-, e.g. a phase resistance and/or a DC line resistance.

Mapping the limb portion voltage sources $V_{A+}$, $V_{A-}$, $V_{B+}$, $V_{B-}$, $V_{C+}$, $V_{C-}$ and inductive voltage portions $U_{A+}$, $U_{A-}$, $U_{B+}$, $U_{B-}$, Uc+, $U_{C-}$ again similarly includes conducting a Kirchhoff analysis of the equivalent converter configuration 10, although other equivalent converter configurations and corresponding analysis techniques are also possible. In applying the Kirchhoff analysis the following equation, in matrix form, is obtained:

$$M_V \cdot \begin{pmatrix} V_{A+} \\ V_{A-} \\ V_{B+} \\ V_{B-} \\ V_{C+} \\ V_{C-} \end{pmatrix} - M_U \cdot \begin{pmatrix} U_{A+} \\ U_{A-} \\ U_{B+} \\ U_{B-} \\ U_{C+} \\ U_{C-} \\ V_{DC} \\ V_{AB} \\ V_{CB} \end{pmatrix} = \begin{pmatrix} 0 \\ 0 \\ 0 \\ 0 \\ 0 \end{pmatrix}$$

where:

$$M_V = \begin{pmatrix} 1 & 1 & -1 & -1 & 0 & 0 \\ 0 & 0 & 1 & 1 & -1 & -1 \\ 0 & 0 & 0 & 0 & 1 & 1 \\ 1 & 0 & -1 & 0 & 0 & 0 \\ 0 & 0 & 1 & 0 & -1 & 0 \end{pmatrix}$$

i.e. $M_V$ is a matrix which maps the position of the limb portion voltage sources $V_{A+}$, $V_{A-}$, $V_{B+}$, $V_{B-}$, $V_{C+}$, $V_{C-}$ within the particular converter structure;

$$M_U = \begin{pmatrix} 1 & -1 & -1 & 1 & 0 & 0 & 0 & 0 & 0 \\ 0 & 0 & 1 & -1 & -1 & 1 & 0 & 0 & 0 \\ 0 & 0 & 0 & 0 & 1 & -1 & -1 & 0 & 0 \\ 1 & 0 & -1 & 0 & 0 & 0 & 0 & 1 & 0 \\ 0 & 0 & 1 & 0 & -1 & 0 & 0 & 0 & -1 \end{pmatrix}$$

i.e. $M_U$ is a matrix which maps the position of the inductive voltage portions $U_{A+}$, $U_{A-}$, $U_{B+}$, $U_{B-}$, $U_{C+}$, $U_{C-}$ within the particular converter structure;

$V_{DC}$ is the DC voltage, i.e. the voltage difference between the first and second DC terminals 14, 16;

$V_{AB}$ is the voltage difference between the first and second converter limbs 12A, 12B; and

$V_{CB}$ is the voltage difference between the third and second converter limbs 12C, 12B.

Depending on the particular converter structure of whichever converter the method of the invention is controlling, one or more of the $M_V$ and/or $M_U$ matrices may take a different form.

In the first method of the invention, carrying out mathematical optimization to provide an optimal limb portion voltage source $V_{A+}$, $V_{A-}$, $V_{B+}$, $V_{B-}$, $V_{C+}$, $V_{C-}$ for each limb portion 12A+, 12A-, 12B+, 12B-, 12C+, 12C- includes reducing any deviation in an actual measured limb portion current $I'_{A+}$, $I'_{A-}$, $I'_{B+}$, $I'_{B-}$, $I'_{C+}$ of a given independent limb portion 12A+, 12A-, 12B+, 12B-, 12C+ from the corresponding determined optimal limb portion current $I_{A+}$, $I_{A-}$, $I_{B+}$, $I_{B-}$, $I_{C+}$ for the said given limb portion 12A+, 12A-, 12B+, 12B-, 12C+.

The first method of controlling the particular three-phase converter structure further includes calculating the inductive voltage portion $U_{A+}$, $U_{A-}$, $U_{B+}$, $U_{B-}$, $U_{C+}$, $U_{C-}$ for each limb portion 12A+, 12A-, 12B+, 12B-, 12C+, 12C-. This calculation is based on the corresponding determined optimal limb portion currents $I_{A+}$, $I_{A-}$, $I_{B+}$, $I_{B-}$, $I_{C+}$ and dependent limb portion current $I_{C-}$, together with the inductance associated with the corresponding limb portion 12A+, 12A-, 12B+, 12B-, 12C+, 12C-.

Thereafter the calculated inductive voltage portion $U_{A+}$, $U_{A-}$, $U_{B+}$, $U_{B-}$, $U_{C+}$, $U_{C-}$ is modified to drive the actual measured limb portion current $I'_{A+}$, $I'_{A-}$, $I'_{B+}$, $I'_{B-}$, I'c+ to follow the corresponding determined optimal limb portion current $I_{A+}$, $I_{A-}$, $I_{B+}$, $I_{B-}$, $I_{C+}$.

Such measuring and modification takes the form of a feedback loop which provides closed-loop control, as illustrated schematically by a second box 22 in the first flow diagram 30. The feedback loop may additionally include a feed-forward element which seeks to predict desirable future values for one or more of the inductive voltage portions $U_{A+}$, $U_{A-}$, $U_{B+}$, $U_{B-}$, $U_{C+}$, $U_{C-}$ in order to improve the performance of the closed-loop control.

The calculated inductive voltage portion $U_{A+}$, $U_{A-}$, $U_{B+}$, $U_{B-}$, $U_{C+}$, Uc-of each limb portion 12A+, 12A-, 12B+, 12B-, 12C+, 12C- is utilised, as indicated by a third process box 24 in the first flow diagram 30, when carrying out the aforementioned mathematical optimization to provide the optimal limb portion voltage sources $V_{A+}$, $V_{A-}$, $V_{B+}$, $V_{B-}$, Vc+, $V_{C-}$.

Such mathematical optimization also includes applying a voltage weighting to the relative voltage contribution provided by each limb portion voltage source $V_{A+}$, $V_{A-}$, $V_{B+}$, $V_{B-}$, $V_{C+}$, $V_{C-}$. The voltage weightings are determined according to measured operating parameters of the particular converter structure being controlled, and may be so determined throughout operation of the said converter. Such potentially repeated determination of the voltage weightings permits the ongoing optimization of the converter operation during, e.g. changing environmental conditions.

For example, during normal operation of the said particular converter structure an identical voltage weighting is applied to the limb portion voltage source $V_{A+}$, $V_{A-}$, $V_{B+}$, $V_{B-}$, $V_{C+}$, Vc- of each limb portion 12A+, 12A-, 12B+, 12B-, 12C+, 12C-.

However during, e.g. abnormal operating conditions, a different voltage weighting can be applied to the limb portion voltage source $V_{A+}$, $V_{A-}$, $V_{B+}$, $V_{B-}$, Vc+, Vc- of one or more limb portions 12A+, 12A-, 12B+, 12B-, 12C+, 12C- to further alleviate the impact of, e.g. the abnormal operating conditions.

More particularly, in the first method of the invention, carrying out mathematical optimisation to provide an optimal limb portion voltage source $V_{A+}$, $V_{A-}$, $V_{B+}$, $V_{B-}$, Vc+, Vc- for each limb portion 12A+, 12A-, 12B+, 12B-, 12C+, 12C- includes determining a minimum individual limb portion voltage source $V_{A+}$, $V_{A-}$, $V_{B+}$, $V_{B-}$, Vc+, Vc- for each limb portion 12A+, 12A-, 12B+, 12B-, 12C+, 12C- that is required to achieve the corresponding minimum limb portion current $I_{A+}$, $I_{A-}$, $I_{B+}$, $I_{B-}$, $I_{C+}$, $I_{C-}$ previously determined.

One way in which minimum individual limb portion voltage sources $V_{A+}$, $V_{A-}$, $V_{B+}$, $V_{B-}$, Vc+, Vc-(i.e. the minimum level of voltage a variable voltage source within a given limb portion 12A+, 12A-, 12B+, 12B-, 12C+, 12C- must provide) may be determined, and the aforementioned individual voltage weightings applied thereto, is by solving for $x$ (where $x$ is the transpose of $[V_{A+}, V_{A-}, V_{B+}, V_{B-}, V_{C-}]$) a nonlinear optimization of the general form:

$$\min_{x} J_{Voltage} = \Psi\big(x(t_1)\big) + \int_{t_0}^{t_1} f(x(t), t)dt$$

subject to an equality constrained equation $M_V.x = b$, where $b$ is known, of the form:

$$M_V \cdot \overbrace{\begin{pmatrix} V_{A+} \\ V_{A-} \\ V_{B+} \\ V_{B-} \\ V_{C+} \\ V_{C-} \end{pmatrix}}^{x} = M_U \cdot \overbrace{\begin{pmatrix} U_{A+} \\ U_{A-} \\ U_{B+} \\ U_{B-} \\ U_{C+} \\ U_{C-} \\ V_{DC} \\ V_{AB} \\ V_{CB} \end{pmatrix}}^{b}$$

and where

$J_{Voltage}$ is the voltage objective function to be minimized;

$\Psi$ is the voltage weighting at time $t_1$

f is the voltage cost function which in the first method of the invention includes a voltage weighting matrix $Q_V$;

$t_0$ is the time at which a particular period of control of the particular converter structure starts; and

$t_1$ is the time at which a particular period of control of the particular converter structure ends.

The voltage weighting matrix $Q_V$ is similarly determined according to measured operating parameters of the converter, and may be so determined throughout the operation of the particular converter structure. As such it too can vary as the said converter is controlled.

Solving the nonlinear optimization mentioned above may also be made subject to an inequality equation of the form:

$$C.x \leq d$$

where

C is a matrix which maps the position of possible maximum limb portion voltage sources in the limb portions 12A+, 12A-, 12B+, 12B-, 12C+, 12C-; and

d is a vector representing of the maximum desired voltage in each limb portion 12A+, 12A-, 12B+, 12B-, 12C+, 12C-

It will be appreciated that the aforementioned first method of controlling a particular converter structure allows, for example, continued tracking of the desired AC current demand phase waveforms $I_A$, $I_B$, $I_C$ and the desired DC current demand level $I_{DC}$ by the converter limbs 12A, 12B, 12C, as required, throughout the period in which the actual measured limb portion currents $I'_{B+}$, $I'_{B-}$ contributed by the second converter limb 12B differ from the actual measured limb portion currents $I'_{A+}$, $I'_{A-}$, $I'_{C+}$, $I'_{C-}$ contributed by the first and second converter limbs 12A, 12C.

Principle steps in a method according to a second embodiment of the invention of controlling a converter are illustrated in a second flow diagram 40 shown in Figure 1(b). The second method of the invention is similar to the first method of the invention and likewise is applicable to any converter that includes at least one converter limb corresponding to a or a respective phase of the converter, with the or each converter limb extending between first and second DC terminals and including first and second limb portions separated by an AC terminal, with the or each converter limb further including first and second director switches, the first and second director switches being switchable to selectively permit and inhibit a flow of current in the first and second limb portions respectively.

By way of example, the second method of the invention is again described in terms of its control of the particular three-phase converter structure depicted in the equivalent converter configuration 10 shown in Figure 3.

The second method comprises a first step which is identical to that of the first method, i.e. obtaining a respective AC current demand phase waveform $I_A$, $I_B$, $I_C$ for each converter limb 12A, 12B, 12C which the corresponding converter limb 12A, 12B, 12C is required to track, and obtaining a DC current demand $I_{DC}$ which the converter limbs 12A, 12B, 12C are also required to track.

The second method also includes an identical second step to the first method, as similarly indicated by a first process box 20 in the second flow diagram 40. As such the second step of the second method of the invention again includes carrying out mathematical optimization to determine five independent minimum limb portion currents $I_{A-}$, $I_{A-}$, $I_{B-}$, $I_{B-}$, $I_{C+}$ that each corresponding limb portion 12A+, 12A-, 12B+, 12B-, 12C+ must contribute to track the corresponding required AC current demand phase waveform $I_A$, $I_B$, $I_C$ and the required DC current demand $I_{DC}$.

In the second method such mathematical optimization is carried out in exactly the same manner as in relation to the first method, i.e. as described hereinabove.

The second method of the invention also includes a third step of providing a limb portion voltage source $V_{A+}$, $V_{A-}$, $V_{B+}$, $V_{B-}$, $V_{C+}$, $V_{C-}$ for each limb portion 12A+, 12A-, 12B+, 12B-, 12C+, 12C- to achieve the corresponding minimum limb portion current $I_{A+}$, $I_{A-}$, $I_{B+}$, $I_{B-}$, $I_{C+}$ previously determined.

More particularly the second method of the invention includes a third step of applying a control algorithm to directly establish optimal limb portion voltage sources $V_{A+}$, $V_{A-}$, $V_{B+}$, $V_{B-}$, $V_{C+}$, $V_{C-}$ from each of the corresponding determined minimum limb portion current $I_{A+}$, $I_{A-}$, $I_{B-}$, $I_{B-}$, $I_{C+}$, as shown by a single fourth box 26 in the second flow diagram 40.

Applying such a control algorithm includes reducing any deviation in the actual measured limb portion current $I'_{A+}$, $I'_{A-}$, $I'_{B+}$, $I'_{B-}$, $I'_{C+}$ of a given independent limb portion 12A+, 12A-, 12B+, 12B-, 12C+ from the corresponding determined minimum limb portion current $I_{A+}$, $I_{A-}$, $I_{B+}$, $I_{B-}$, $I_{C+}$ for the said given limb portion 12A+, 12A-, 12B+, 12B-, 12C+.

One way in which the deviation in the actual measured limb portion current $I'_{A+}$, $I'_{A-}$, $I'_{B+}$, $I'_{B-}$, $I'_{C+}$ of a given independent limb portion 12A+, 12A-, 12B+, 12B-, 12C+ from the corresponding determined minimum limb portion current $I_{A+}$, $I_{A-}$, $I_{B+}$, $I_{B-}$, $I_{C+}$ may be reduced, and preferably eliminated, is by establishing a feedback loop 50 as shown schematically in Figure 4.

In the embodiment shown the feedback loop 50 compares a respective actual measured limb portion current $I'_{A+}$, $I'_{A-}$, $I'_{B+}$, $I'_{B-}$, $I'_{C+}$ with the corresponding determined minimum limb portion current $I_{A+}$, $I_{A-}$, $I_{B+}$, $I_{B-}$, $I_{C+}$ and calculates a corresponding limb portion error $e_{A+}$, $e_{A-}$, $e_{B+}$, $e_{B-}$, ec+. The feedback loop 50 then applies a correction factor K to each limb portion error $e_{A+}$, $e_{A-}$, $e_{B+}$, $e_{B-}$, ec+ to thereby establish directly the corresponding limb portion voltage source $V_{A+}$, $V_{A-}$, $V_{B+}$, $V_{B-}$, $V_{C+}$, $V_{C-}$ which is required to drive the error $e_{A+}$, $e_{A-}$, $e_{B+}$, $e_{B-}$, ec+ towards zero.

The correction factor *K* may take the form of a control system matrix, such as a gain matrix (not shown), which sets out individual correction factors that each limb portion error $e_{A+}$, $e_{A-}$, $e_{B+}$, $e_{B-}$, ec+ is, e.g. multiplied by in the case of a gain matrix, to establish the corresponding limb portion voltage source $V_{A+}$, $V_{A-}$, $V_{B+}$, $V_{B-}$, $V_{C+}$, $V_{C-}$.

One way in which such individual correction factors may be established is by creating an equivalent converter configuration that represents the voltage conditions in the particular three-phase converter structure under control and thereafter considering the dynamics of such an equivalent converter configuration.

More particularly, in relation to the embodiment described hereinabove, the foregoing steps may be achieved by creating the equivalent converter configuration 10 shown in Figure 3 and mapping a limb portion voltage source $V_{A+}$, $V_{A-}$, $V_{B+}$, $V_{B-}$, $V_{C+}$, Vc- and an inductive component for each limb portion 12A+, 12A-, 12B+, 12B-, 12C+, 12C-. Thereafter such mapping may include conducting a Kirchhoff analysis of the equivalent converter configuration 10 (although other equivalent converter configurations and corresponding analysis techniques are also possible) that applies Kirchhoff's current and voltage laws to describe the dynamics of the equivalent converter configuration 10 as:

$$v = M\frac{dI}{dt} + N\xi$$

where:

$v$ is the transpose of $[V_{A+}, V_{A-}, V_{B+}, V_{B-}, V_{C+}, V_{C-}]$;
M is a coupled-inductance matrix which maps the inductive component of each limb portion, and more particularly maps each of the individual limb portion, phase and DC line inductances associated with each limb portion; e.g.

$$M = 10^{-3}\begin{pmatrix} 6 & -2 & 1 & 0 & 1 \\ -1 & 5 & 1 & 0 & 1 \\ 1 & 0 & 6 & -2 & 1 \\ 1 & 0 & -1 & 5 & 1 \\ -1 & 2 & -1 & 2 & 4 \\ 6 & -5 & 6 & -5 & 4 \end{pmatrix};$$

$I$ is the transpose of $[I'_{A+}, I'_{A-}, I'_{B+}, I'_{B-}, I'_{C+}]$, i.e. the transpose of a currents vector representing the actual measured independent limb portion currents $I'_{A+}, I'_{A-}, I'_{B+}, I'_{B-}, I'_{C+}$;
$N$ is an input voltage matrix which maps the position of various input voltages within the particular converter structure, e.g.

$$N = \frac{1}{6}\begin{bmatrix} 3 & -4 & 2 \\ 3 & 4 & -2 \\ 3 & 2 & 2 \\ 3 & -2 & -2 \\ 3 & 2 & -4 \\ 3 & -2 & 4 \end{bmatrix};$$

and
$\xi$ is an input voltages vector representing external disturbances, e.g.
where

$$\xi = \begin{bmatrix} V_{DC} \\ V_{AB} \\ V_{CB} \end{bmatrix}$$

$V_{DC}$ is the DC voltage, i.e. the voltage difference between the first and second DC terminals 14, 16;
$V_{AB}$ is the voltage difference between the first and second converter limbs 12A, 12B; and
$V_{CB}$ is the voltage difference between the third and second converter limbs 12C, 12B.

Depending on the particular converter structure of whichever converter the method of the invention is controlling, and depending on which limb portion is/are chosen as being dependent on the other limb portions, one or more of the M and $N$ matrices may similarly take different forms.

In this way, conducting the aforesaid Kirchhoff analysis makes it possible to take into account all of the factors mentioned above relating to a particular converter structure, i.e. $M$, $I$, $N$, $\xi$, when considering what impact a change in one or more individual limb portion voltage sources $V_{A+}$, $V_{A-}$, $V_{B+}$, $V_{B-}$, $V_{C+}$, Vc-will have, e.g. on the actual measured limb portion current $I'_{A+}$, $I'_{A-}$, $I'_{B+}$, $I'_{B-}$, $I'_{C+}$ produced by the particular converter structure. This ability renders the second method of the invention robust against controller uncertainties and modelling errors.

Moreover, as a result it is possible thereafter to establish each of the individual correction factors by considering what change needs to be made to a given individual limb portion voltage source $V_{A+}$, $V_{A-}$, $V_{B+}$, $V_{B-}$, $V_{C+}$, Vc- to desirably alter the corresponding limb portion current provided by the particular converter structure under control, i.e. the corresponding actual measured limb portion current $I'_{A+}$, $I'_{A-}$, $I'_{B+}$, $I'_{B-}$, $I'_{C+}$, in order to drive the actual measured limb portion current $I'_{A+}$, $I'_{A-}$, $I'_{B+}$, $I'_{B-}$, I'c+ towards the determined minimum limb portion current $I_{A+}$, $I_{A-}$, $I_{B+}$, $I_{B-}$, $I_{C+}$, i.e. in order to reduce the corresponding limb portion error $e_{A+}$, $e_{A-}$, $e_{B+}$, $e_{B-}$, $e_{C+}$ towards zero.

Once such individual correction factors have been established for a particular converter structure, e.g. at a converter design and commissioning stage, there is not normally a need to determine them again. As a result the feedback loop 50 involves minimal computational effort since in each cycle it is simply required to multiply a given limb portion error $e_{A+}$, $e_{A-}$, $e_{B+}$, $e_{B-}$, ec+ by the corresponding individual correction factor which has already been determined.

There is provided a method according to a third embodiment of the invention of controlling a converter. The third method of the invention is similar in steps to the first method of the invention, and like features share the same reference numerals.

The third method of the invention differs from the first method of the invention in that the third method of the invention is applicable to any converter that includes at least one converter limb corresponding to a or a respective phase of the converter, with the or each converter limb extending between first and second DC terminals and including first and second limb portions separated by an AC terminal, with each limb portion further including a converter arm and a director arm, each director arm being connected in parallel with the corresponding converter arm, each director arm including a director switch, each director switch being switchable to selectively permit and inhibit a flow of current in the corresponding director arm.

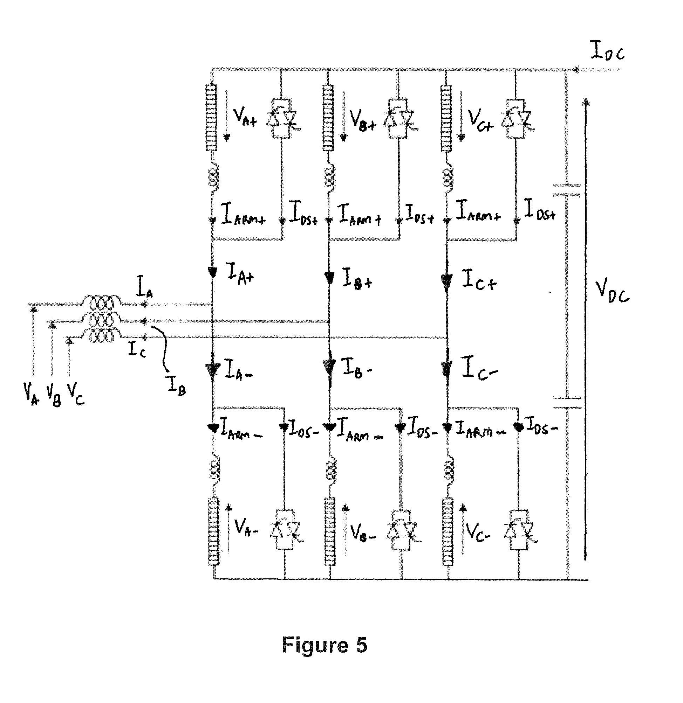

By way of example, however, it is described in connection with a three-phase converter which has three converter limbs, each of which corresponds to one of the three phases, as shown in Figure 5. Each converter limb extends between first and second DC terminals and includes first and second limb portions which are separated by an AC terminal. Each limb portion includes a converter arm and a director arm. In each limb portion, the director arm is connected in parallel with the converter arm between the corresponding AC and DC terminals. Each director arm includes a director switch that is switchable to turn on to permit a flow of current in the corresponding director arm, and to turn off to inhibit a flow of current in the corresponding director arm.

In the embodiment shown, since each director arm carries a current that is different from the converter arm with which it is connected in parallel, a determined director arm current for a director arm is not the same as a determined converter arm current for the corresponding converter arm. A determined limb portion current for each limb portion is the sum of the determined director arm current for the corresponding director arm and the determined converter arm current for the corresponding converter arm.

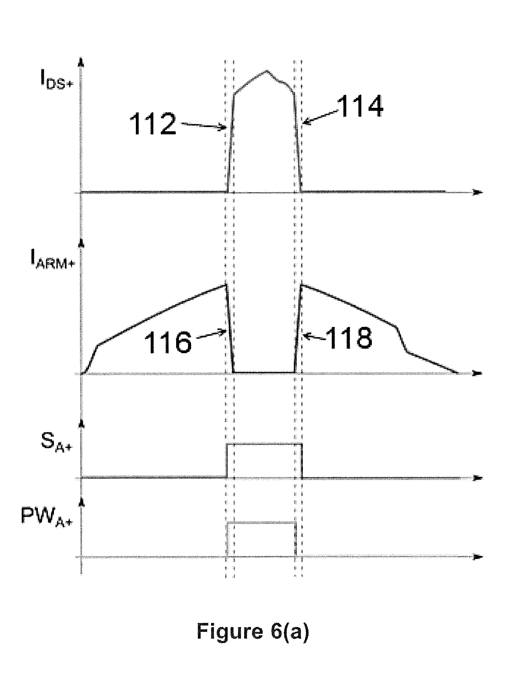

Figure 6(a) shows respective determined arm currents $I_{DS+}$, $I_{ARM-}$ for the director and converter arms of the first limb portion of one of the converter limbs. It will be understood that the configuration of the determined arm currents $I_{DS+}$, $I_{ARM-}$ - in Figure 6(a) applies mutatis mutandis to the determined arm currents $I_{DS+}$, $I_{ARM-}$ for each of the other limb portions.

The determined director arm current $I_{DS+}$ for the director arm is configured to include a first current ramp profile 112 and a second current ramp profile 114. The first current ramp profile 112 includes a positive, constant current slope, and the second current ramp profile 114 includes a negative, constant current slope.

The determined converter arm current $I_{ARM+}$ for the converter arm is configured to include a third current ramp profile 116 and a fourth current ramp profile 118. The third current ramp profile 116 includes a negative, constant current slope, and the second current ramp profile 118 includes a positive, constant current slope. More particularly the third current ramp profile 116 is the inverse of the first current ramp profile 112, and the fourth current ramp profile 118 is the inverse of the second current ramp profile 114.

The first current ramp profile 112 of the determined director arm current $I_{DS+}$ for the director arm is timed to fully overlap with the third current ramp profile 116 of the determined converter arm current $I_{ARM+}$ for the converter arm so as to cause transfer of current from the converter arm to the director arm after the director switch for the director arm is switched from inhibiting a flow of current to permitting a flow of current in the director arm. Similarly, the second current ramp profile 114 of the determined director arm current $I_{DS+}$ for the director arm is timed to fully overlap with the fourth current ramp profile 118 of the determined converter arm current $I_{ARM+}$ for the converter arm so as to cause transfer of current from the director arm to the converter arm before the director switch for the second limb portion is switched from permitting a flow of current to inhibiting a flow of current in the director arm.

It will be appreciated that the overlap between the current ramp profiles of different determined arm currents

$I_{DS+}$, $I_{ARM-}$ may be partial instead of full.

The first and third current ramp profiles 112,116 are triggered to occur immediately after the director switch for the director arm is switched from inhibiting a flow of current to permitting a flow of current in the director arm.

Meanwhile the second and fourth current ramp profiles 114,118 are triggered to occur immediately before the director switch for the director arm is switched from permitting a flow of current to inhibiting a flow of current in the director arm. This may be achieved through use of a switching signal $PW_{A+}$, whereby a change in status of the switching signal $PW_{A+}$ triggers the second and fourth current ramp profiles 114,118 to occur at a period of time immediately before the status $S_{A+}$ of the director switch of the director arm changes in order to switch from permitting a flow of current to inhibiting a flow of current in the director arm.

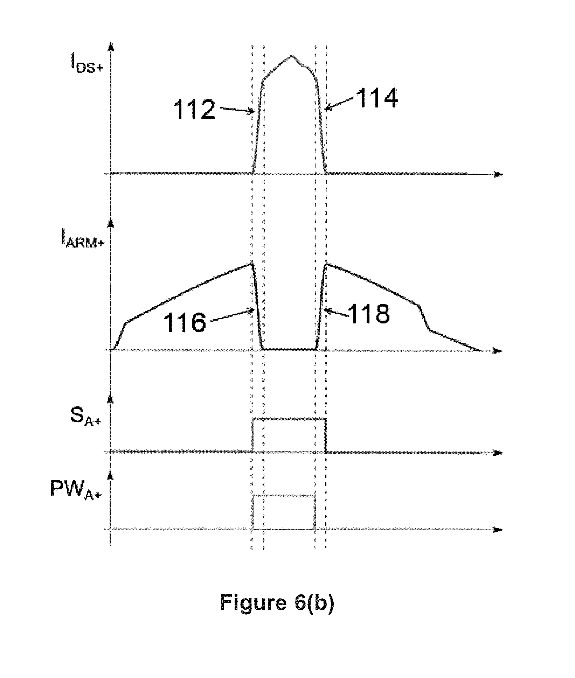

Optionally, in order to avoid the occurrence of a voltage pulse in the converter, each of the current ramp profiles 112,114,116,118 may have a non-zero, variable current slope instead of a non-zero, constant current slope. More particularly, each of the current ramp profiles 112,114,116,118 may have a non-zero, variable current slope that is a part-sinusoid current slope, as shown in Figure 6(b).

It will be appreciated that features of the third method of the invention may be used in combination with features of the second method of the invention.

## Claims

1. A method of controlling a converter including at least one converter limb corresponding to a or a respective phase of the converter, the or each converter limb extending between first and second DC terminals and including first and second limb portions separated by an AC terminal, each limb portion including a converter arm, at least one of the limb portions including at least one director arm, the or each director arm including a director switch, the or each director switch being switchable to selectively permit and inhibit a flow of current in the corresponding director arm, the method comprising the steps of:

   (a) obtaining a or a respective AC current demand phase waveform for the or each converter limb which the corresponding converter limb is required to track, and a DC current demand which the or each converter limb is also required to track;
   (b) determining a limb portion current for each limb portion that the limb portion must contribute to track the corresponding required AC current demand phase waveform and the required DC current demand, wherein the step of determining the limb portion current for each limb portion includes determining a director arm current for the or each director arm that the director arm must contribute to track the corresponding required AC current demand phase waveform and the required DC current demand, wherein the step of determining the limb portion current for each limb portion includes determining a converter arm current for each converter arm that the converter arm must contribute to track the corresponding required AC current demand phase waveform and the required DC current demand, wherein each of the determined arm currents includes a current ramp profile, each of the current ramp profiles including a non-zero current slope;
   (c) timing the current ramp profile of the determined director arm current for the director arm or one of the director arms to fully or partially overlap with the current ramp profile of the determined arm current for one of the other arms so as to cause transfer of current between the director arm or the one of the director arms and the one of the other arms:

      before the director switch for the director arm or the one of the director arms is switched from permitting a flow of current to inhibiting a flow of current in the corresponding director arm; and/or
      after the director switch for the director arm or the one of the director arms is switched from inhibiting a flow of current to permitting a flow of current in the corresponding director arm; and

   (d) providing a limb portion voltage source for each limb portion to achieve the corresponding determined limb portion current.

2. A method of controlling a converter according to Claim 1 wherein the current ramp profiles are identical, or one of the current ramp profiles may be the inverse of one other of the current ramp profiles.

3. A method of controlling a converter according to Claim 1 or Claim 2 wherein the non-zero current slope is a constant current slope or a variable current slope.

4. A method of controlling a converter according to Claim 3 wherein, when the non-zero current slope is a variable current slope, the non-zero current slope is a part-sinusoid current slope or includes a part-sinusoid current slope section.

5. A method of controlling a converter according to any preceding claim wherein the or each director arm is connected in series or parallel with one or a respective one of the converter arm between the corresponding AC and DC terminals.

6. A method of controlling a converter according to any preceding claim further including the step of carrying out mathematical optimization to determine one or more optimal limb portion currents and/or provide optimal limb portion voltage sources.

7. A method of controlling a converter according to Claim 6 wherein carrying out mathematical optimization includes creating an equivalent converter configuration which represents a corresponding one of the flow of current through the converter and/or voltage conditions in the converter.

8. A method of controlling a converter according to Claim 7 wherein creating an equivalent converter configuration which represents the flow of current through the converter includes mapping possible current flow paths through the converter, and wherein creating an equivalent converter configuration which represents voltage conditions in the converter includes mapping the limb portion voltage source and an inductive component for each limb portion.

9. A method of controlling a converter according to any of Claims 6 to 8 wherein the converter includes a plurality of converter limbs and wherein carrying out mathematical optimization includes a corresponding one of applying a current weighting to the relative current contribution provided by a plurality of limb portions and/or applying a voltage weighting to the relative voltage contribution provided by each limb portion voltage source.

10. A method of controlling a converter according to Claim 9 including determining the or each weighting according to measured operating parameters of the converter.

11. A method of controlling a converter according to Claim 9 or Claim 10 wherein when controlling the converter under a particular operating condition applying a weighting includes applying a different weighting to at least one limb portion such that the or each said limb portion provides a different contribution to the other limb portions.

12. A method of controlling a converter according to any of Claims 6 to 11 wherein carrying out mathematical optimization to provide an optimal limb portion voltage source for each limb portion includes reducing any deviation in an actual measured limb portion current of a given limb portion from the corresponding determined limb portion current for the said given limb portion, and optionally wherein reducing any deviation in an actual measured limb portion current from the corresponding determined limb portion current includes calculating an inductive voltage portion for the corresponding limb portion.

13. A method of controlling a converter according to Claim 9 further including modifying the calculated inductive voltage portion to drive the actual measured limb portion current to follow the corresponding determined limb portion current.

14. A method of controlling a converter according to any preceding claim including carrying out mathematical optimization to determine one or more minimum individual limb portion currents that the corresponding limb portion must contribute to track the corresponding required AC current demand phase waveform and the required DC current demand, and/or provide minimum individual limb portion voltage sources to achieve the corresponding determined limb portion current.

15. A method of controlling a converter according to any preceding claim including carrying out mathematical optimization only to determine one or more optimal limb portion currents, wherein providing a limb portion voltage source for each limb portion to achieve the corresponding determined limb portion current includes applying a control algorithm to directly establish optimal limb portion voltage sources from each of the corresponding determined limb portion currents.

16. A converter comprising at least one converter limb corresponding to a or a respective phase of the converter, the or each converter limb extending between first and second DC terminals and including first and second limb portions separated by an AC terminal, each limb portion including a converter arm, at least one of the limb portions including at least one director arm, the or each director arm including a director switch, the or each director switch being switchable to selectively permit and inhibit a flow of current in the corresponding director arm respectively, the converter further comprising a controller configured to:

(a) obtain a or a respective AC current demand phase waveform for the or each converter limb which the corresponding converter limb is required to track, and a DC current demand which the or each converter limb is also required to track;

(b) determine a limb portion current for each limb portion that the limb portion must contribute to track the corresponding required AC current demand phase waveform and the required DC current demand, wherein determining the limb portion current for each limb portion includes determining a director arm current for the or each director arm that the director arm must contribute to track the corresponding required AC current demand phase waveform and the required DC current demand, wherein determining the limb portion current for each limb portion includes determining a converter arm current for each converter arm that the converter arm must contribute to track the corresponding required AC current demand phase waveform and the required DC current demand, wherein each of the determined arm currents includes a current ramp profile, each of the current ramp profiles including a non-zero current slope;

(c) time the current ramp profile of the determined director arm current for the director arm or one of the director arms to fully or partially overlap with the current ramp profile of the determined arm current for one of the other arms so as to cause transfer of current between the director arm or the one of the director arms and the one of the other arms:

before the director switch for the director arm or the one of the director arms is switched from permitting a flow of current to inhibiting a flow of current in the corresponding director arm; and/or
after the director switch for the director arm or the one of the director arms is switched from inhibiting a flow of current to permitting a flow of current in the corresponding director arm; and

(d) provide a limb portion voltage source for each limb portion to achieve the corresponding determined limb portion current.

30

$I_{A+}, I_{A-}, I_{B+}, I_{B-}, I_{C+}$    $U_{A+}, U_{A-}, U_{B+}, U_{B-}, U_{C+}, U_{C-}$

```
        ┌──────┐     ┌──────┐     ┌──────┐
 ──────▶│  20  │────▶│  22  │────▶│  24  │────▶
        └──────┘     └──────┘     └──────┘
```

$I_A, I_B, I_C, bc$

$V_{A+}, V_{A-}, V_{B+}, V_{B-}, V_{C+}, V_{C-}$

$I'_{A+}, I'_{A-}, I'_{B+}, I'_{B-}, I'_{C+}$

$V_{AB}, V_{CB}, V_{DC}$

Figure 1(a)

40

$I_{A+}, I_{A-}, I_{B+}, I_{B-}, I_{C}+$

$V_{A+}, V_{A-}, V_{B+}, V_{B-}, V_{C+}, V_{C-}$

```
        ┌──────┐     ┌──────┐
 ──────▶│  20  │────▶│  26  │────▶
        └──────┘     └──────┘
```

$I_A, I_B, I_C, bc$

$I'_{A+}, I'_{A-}, I'_{B+}, I'_{B-}, I'_{C+}$

$V_{AB}, V_{CB}, V_{DC}$

Figure 1(b)

Figure 2(a)

Figure 2(b)

Figure 2(c)

Figure 2(d)

Figure 2(e)

Figure 2(f)

Figure 2(g)

Figure 2(h)

**Figure 2(i)**

**Figure 2(j)**

Figure 3

Figure 4

Figure 5

Figure 6(a)

Figure 6(b)

Europäisches
Patentamt

European
Patent Office

Office européen
des brevets

# EUROPEAN SEARCH REPORT

Application Number

EP 14 27 5172

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MERLIN MICHAEL M C ET AL: "The Alternate Arm Converter: A New Hybrid Multilevel Converter With DC-Fault Blocking Capability", IEEE TRANSACTIONS ON POWER DELIVERY, IEEE SERVICE CENTER, NEW YORK, NY, US, vol. 29, no. 1, 1 February 2014 (2014-02-01), pages 310-317, XP011537871, ISSN: 0885-8977, DOI: 10.1109/TPWRD.2013.2282171 [retrieved on 2014-01-21] * paragraph [0IIA]; figure 3 * ----- | 1-5,16 | INV. H02M7/483 |
| X | JUN WANG ET AL: "State-space switching model of modular multilevel converters", 2013 IEEE 14TH WORKSHOP ON CONTROL AND MODELING FOR POWER ELECTRONICS (COMPEL), IEEE, 23 June 2013 (2013-06-23), pages 1-10, XP032500843, ISSN: 1093-5142, DOI: 10.1109/COMPEL.2013.6626394 [retrieved on 2013-10-09] * paragraph [II.B]; figure 1b * ----- | 1-5,16 | |

TECHNICAL FIELDS
SEARCHED (IPC)

H02M

The present search report has been drawn up for all claims

| Place of search | Date of completion of the search | Examiner |
|---|---|---|
| The Hague | 26 January 2015 | Imbernon, Lisa |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document